# EUROPEAN PATENT SPECIFICATION

(11) **EP 4 331 878 B1**
(45) Date of publication and mention of the grant of the patent: **22.07.2026**
(21) Application number: 22795671.1
(22) Date of filing: 21.04.2022
(51) Int. Cl.: B60H 1/22, F24H 15/00, G05D 23/19, H05B 1/02, F24H 1/00, F24H 9/20, F24H 15/37

(54) **HEATING CONTROL DEVICE AND CONTROL PROGRAM, FLUID HEATING UNIT, HEATING CYCLE DEVICE AND VEHICLE AIR CONDITIONER EQUIPPED THEREWITH**
HEIZUNGSSTEUERUNGSVORRICHTUNG UND STEUERUNGSPROGRAMM, FLÜSSIGKEITSERHITZUNGSEINHEIT, HEIZZYKLUSVORRICHTUNG UND DAMIT AUSGESTATTETE FAHRZEUGKLIMAANLAGE
DISPOSITIF DE RÉGULATION DE CHAUFFAGE ET PROGRAMME DE RÉGULATION, UNITÉ DE CHAUFFAGE DE FLUIDE, DISPOSITIF À CYCLE DE CHAUFFAGE ET CLIMATISEUR DE VÉHICULE QUI EN EST ÉQUIPÉ

(30) Priority: 28.04.2021 JP 2021075966
(43) Date of publication of application: 06.03.2024
(73) Proprietor: Valeo Electrification, 95892 Cergy Pontoise (FR)
(72) Inventor: LEI, Mo, Kumagaya-shi Saitama 360-0193 (JP); KITAJIMA, Tatsuya, Kumagaya-shi Saitama 360-0193 (JP)
(74) Representative: Valeo Powertrain Systems
(86) International application number: PCT/JP2022/018481
(87) International publication number: WO 2022/230758

(56) References cited:
- EP-B1- 2 772 375
- DE-B4- 102011 057 105
- JP-A- 2015 058 741
- JP-A- 2018 114 945
- JP-A- H11 240 324
- US-B2- 10 500 921

## Description

### Technical Field

The present invention relates to a heating control device, a control program, a fluid heating unit, a heating cycle device, and a vehicle air conditioner including the same.

### Background Art

In the related art, there is known a vehicle air conditioner using a hot water heating device that performs heating using hot water (see, for example, Patent Literature 1). The vehicle air conditioner of Patent Literature 1 includes a first switch and a second switch, and a target temperature of the hot water in a case where the vehicle air conditioner is started up by the second switch is set to a value lower than a target temperature of the hot water in a case where the vehicle air conditioner is started up by the first switch, and thus a comfortable heating temperature can be obtained during heating in a case where a temperature in a vehicle interior is high.

Further, as a heater of a hot water heating device, a fluid heating unit for heating a fluid by an electric heater is disclosed (see, for example, Patent Literature 2).

As a method of controlling an amount of electric power supplied to an electric heater, a method of supplying DC power obtained from a battery by duty control using an inverter is known (see, for example, Patent Literature 3).

### Citation List

### Patent Literature

Patent Literature 1: JPH10-258630A
Patent Literature 2: JP2017-215084A
Patent Literature 3: JP2003-335127A
Document US 10 500 921 B2 discloses a heating control device in a vehicle air conditioner.

### Summary of Invention

### Technical Problem

In recent years, an electric vehicle (EV) driven only by an electric motor, a hybrid electric vehicle (HEV) driven by a plurality of power sources including an electric power motor and an internal combustion engine, and a vehicle in which an internal combustion engine generates only electric power and which is driven by an electric motor driven by the electric power generated by the internal combustion engine have become widespread.

In a case of the electric vehicle, since an engine is not provided, it is sufficient that a total amount of a coolant in a coolant loop is less than 10 liters, which is smaller than that in an engine-mounted vehicle. A flow rate of the coolant in the coolant loop is about 10 liters/minute even though the flow rate fluctuates in practice, and the entire fluid circulates in less than one minute. For this reason, when temperature hunting occurs at an outflow point of the fluid heating unit, the total amount of coolant is small, thus the hunting is likely to affect an entire path, and there is a need to stabilize the temperature by performing temperature control more severely than in the engine-mounted vehicle.

Further, in a case of the hybrid electric vehicle or the vehicle including the internal combustion engine but driven by the electric motor, the total amount of coolant is larger than that of the electric vehicle, but there is a demand to reduce the amount of coolant to reduce a total weight of the vehicle, and the total amount of coolant tends to decrease. Therefore, when the temperature hunting occurs at the outflow point of the heater, the hunting is likely to affect the entire path as well.

For example, in FIG. 2 of the vehicle air conditioner of Patent Literature 1, a temperature change of the hot water is controlled to be ±5°C with respect to the target temperature, whereas in a vehicle having a small total amount of coolant, it is required to further reduce the temperature change to be, for example, ±1°C with respect to the target temperature.

An object of the present disclosure is to provide a heating control device, a control program, a fluid heating unit, a heating cycle device, and a vehicle air conditioner including the same, by which a target temperature can be reached early and a fluctuation of the temperature with respect to the target temperature can be controlled to be small.

### Solution to Problem

A heating control device according to the present invention is a heating control device that controls a transistor that supplies electric power by a switching operation to a heater that generates heat when being energized to heat a coolant supplied to a radiator mounted in a vehicle air conditioner. The heating control device controls the switching operation of the transistor based on a heating amount control profile, and adjusts a heating amount from the heater by changing an on/off duty ratio of the transistor. The heating amount control profile is a function indicating a relation between a temperature of the coolant and the heating amount from the heater, and includes a decrease portion in which the heating amount decreases as the temperature increases from a low temperature side to a high temperature side across a target temperature of the coolant. The decrease portion includes a first decrease portion in which the temperature is in a temperature range equal to or lower than the target temperature and a second decrease portion in which the temperature is in a temperature range equal to or higher than the target temperature, and the heating amount at the target temperature is the same in the first decrease portion and the second decrease portion. The first decrease portion and the second decrease portion each has a negative slope in the function. The first decrease portion includes a first region and a second region on the high temperature side with respect to the first region. As negative slopes, a slope of the heating amount control profile at any temperature in the second region is larger than a slope of the heating amount control profile at any temperature in the first region.

In the heating control device according to the invention, the decrease portion may be a curve including an inflection point, and the temperature at the inflection point may coincide with the target temperature.

In the heating control device according to the invention, the decrease portion may be a curve including an inflection point, and the temperature at the inflection point may be higher than the target temperature.

In the heating control device according to the invention, the decrease portion may be a curve including an inflection point, the temperature at the inflection point may be lower than the target temperature, and the second region may be in a region on the low temperature side with respect to the inflection point.

In the heating control device according to the invention, the first region and the second region may both be linear functions having different slopes in the function.

In the heating control device according to the invention, the decrease portion may be a curve including no inflection point.

In the heating control device according to the invention, the heating amount control profile may include, on the low temperature side with respect to the first decrease portion, a constant portion in which the heating amount is constant even when the temperature increases from the low temperature side to the high temperature side.

In the heating control device according to the invention, it is preferable that the second decrease portion includes, on the high temperature side with respect to the target temperature, a heat radiation amount corresponding region in which the heating amount is maintained at a predetermined heating amount.

A fluid heating unit according to the invention includes: a heater configured to generate heat when being energized to heat a coolant; a transistor configured to supply electric power to the heater by a switching operation; and the heating control device according to the invention. The heating control device controls the switching operation of the transistor.

A heating cycle device according to the invention includes: a circulation flow path; a coolant filled in the circulation flow path; a pump configured to circulate the coolant in the circulation flow path; the fluid heating unit according to the invention configured to adjust a temperature of the coolant; and a radiator configured to radiate heat from the coolant. The coolant is heated when the heater is energized by the transistor in the fluid heating unit.

A vehicle air conditioner according to the invention includes the heating cycle device according to the invention, and is mounted on a vehicle. The vehicle is capable of being driven by an electric motor, the vehicle air conditioner further includes a temperature adjustment unit configured to adjust a temperature of air supplied into a vehicle interior, and the radiator is a hot water heat exchanger disposed inside the temperature adjustment unit.

A control program according to the invention causes the heating control device according to the invention to execute a process of controlling the switching operation of the transistor based on the heating amount control profile.

### Advantageous Effects of Invention

According to the present disclosure, it is possible to provide a heating control device, a control program, a fluid heating unit, a heating cycle device, and a vehicle air conditioner including the same, by which the target temperature can be early reached and a fluctuation of the temperature with respect to the target temperature can be controlled to be small.

### Brief Description of Drawings

[FIG. 1] FIG. 1 is a block diagram illustrating an example of a fluid heating unit, a heating cycle device, and a vehicle air conditioner including the same according to the present embodiment.
[FIG. 2] FIG. 2 is a graph illustrating a first example of a heating amount control profile.
[FIG. 3] FIG. 3 is a graph illustrating a second example of the heating amount control profile.
[FIG. 4] FIG. 4 is a graph illustrating a third example of the heating amount control profile.
[FIG. 5] FIG. 5 is a graph illustrating a fourth example of the heating amount control profile.
[FIG. 6] FIG. 6 is a graph illustrating a fifth example of the heating amount control profile.
[FIG. 7] FIG. 7 is a graph illustrating a first example of a profile excluded from the heating amount control profile.
[FIG. 8] FIG. 8 is a graph illustrating a second example of the profile excluded from the heating amount control profile.
[FIG. 9] FIG. 9 is a graph illustrating a third example of the profile excluded from the heating amount control profile.
[FIG. 10] FIG. 10 is a graph illustrating a fourth example of the profile excluded from the heating amount control profile.
[FIG. 11] FIG. 11 is a diagram illustrating an example of duty control of the heating cycle device, in which (a) illustrates the duty control in a constant portion, (b) illustrates the duty control at any temperature in a decrease portion, and (c) illustrates the duty control at any temperature in a heat radiation amount corresponding region.
[FIG. 12] FIG. 12 is a graph illustrating a relation between a heating time and a coolant temperature according to a first example.
[FIG. 13] FIG. 13 is a graph illustrating a relation between a heating time and a coolant temperature according to a first comparative example.
[FIG. 14] FIG. 14 is a graph illustrating a relation between a heating time and a coolant temperature according to a second comparative example.

### Description of Embodiments

An aspect of the invention will be described below with reference to accompanying drawings. An embodiment to be described below is an example of the invention, and the invention is not limited to the following embodiment. In the specification and the drawings, elements having the same reference numerals indicate the same elements. Various modifications may be made within the scope of the appended claims.

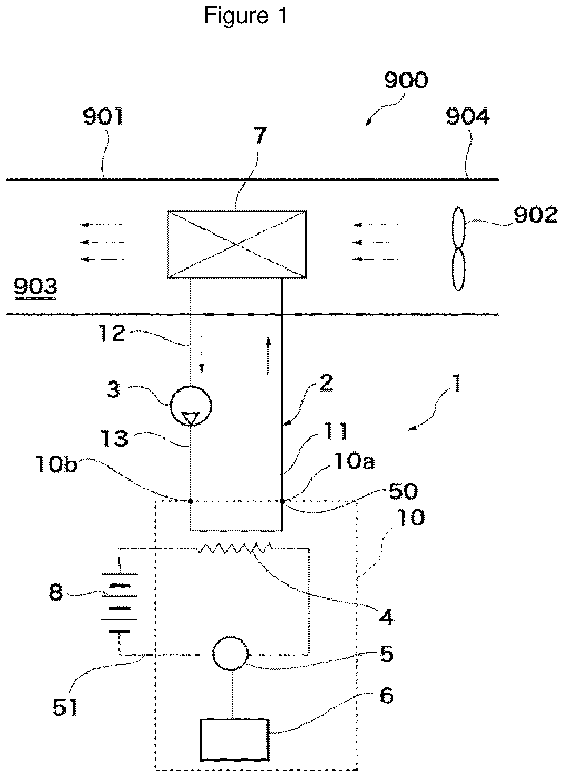

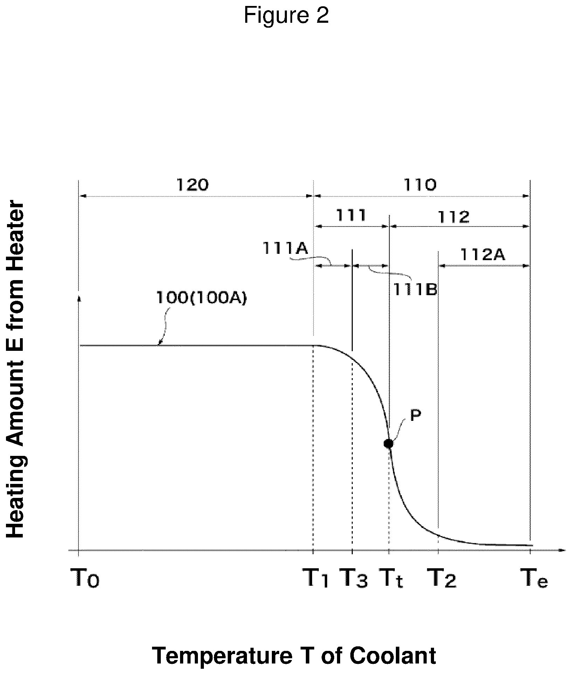

FIG. 1 is a block diagram illustrating an example of a heating cycle device and a vehicle air conditioner including the same according to the present embodiment. A heating control device 6 according to the present embodiment is a heating control device that controls a transistor 5 that supplies electric power by a switching operation to a heater 4 that generates heat when being energized to heat a coolant supplied to a radiator 7 mounted in a vehicle air conditioner 900. The heating control device 6 controls the switching operation of the transistor 5 based on a heating amount control profile 100 (100A to 100E) illustrated in FIGS. 2 to 6, and adjusts a heating amount from the heater 4 by changing an on/off duty ratio of the transistor 5. The heating amount control profile 100 (100A to 100E), as illustrated in FIGS. 2 to 6, is a function indicating a relation between a temperature T of the coolant and a heating amount E from the heater, and includes a decrease portion 110 in which the heating amount E decreases as the temperature T increases from a low temperature side to a high temperature side across a target temperature Tt of the coolant. The decrease portion 110 includes a first decrease portion 111 in which the temperature T is in a temperature range equal to or lower than the target temperature Tt and a second decrease portion 112 in which the temperature T is in a temperature range equal to or higher than the target temperature Tt, and the first decrease portion 111 and the second decrease portion 112 have the same heating amount E at the target temperature Tt. The first decrease portion 111 and the second decrease portion 112 each has a negative slope in the function. The first decrease portion 111 includes a first region 111A and a second region 111B on the high temperature side with respect to the first region 111A. As negative slopes, a slope of the heating amount control profile 100 (100A to 100E) at any temperature in the second region 111B is larger than a slope of the heating amount control profile 100 (100A to 100E) at any temperature in the first region 111A.

A fluid heating unit 10 according to the present embodiment includes the heater 4 that generates heat by being energized to heat the coolant, the transistor 5 that supplies the electric power to the heater 4 by the switching operation, and the heating control device 6 according to the present embodiment, and the heating control device 6 controls the switching operation of the transistor 5.

In the fluid heating unit 10, the transistor 5 supplies the electric power to the heater 4 and the heater 4 generates heat, thereby heating the coolant supplied to the radiator 7 of the vehicle air conditioner. At this time, the heating control device 6 controls the switching operation of the transistor 5 based on the heating amount control profile 100 (100A to 100E), and adjusts the heating amount from the heater 4 by changing the on/off duty ratio of the transistor 5, and thus the temperature of the coolant is adjusted.

A heating cycle device 1 according to the present embodiment includes a circulation flow path 2, the coolant filled in the circulation flow path 2, a pump 3 that circulates the coolant in the circulation flow path 2, the fluid heating unit 10 according to the present embodiment that adjusts the temperature of the coolant, and the radiator 7 that radiates heat from the coolant, and the coolant is heated when the heater 4 is energized by the transistor 5 in the fluid heating unit 10.

The heating cycle device 1 is a device that generates hot air for heating in the vehicle air conditioner by exchanging heat between the coolant whose temperature is adjusted by the fluid heating unit 10 and air passing through the radiator 7.

The circulation flow path 2 includes a pipe 12 that connects a coolant outflow opening of the radiator 7 and the pump 3, and a pipe 13 that connects the pump 3 and an inlet 10b of a tank. Then, the coolant is sent by the pump 3 through a pipe 11 that connects an outlet 10a of a tank (not illustrated) accommodating the heater 4 and a coolant inflow opening of the radiator 7, and is introduced into a heating chamber in the tank (not illustrated) from the inlet 10b through the pipe 13, and is heated by the heater 4 built in the tank. Subsequently, the heated coolant is led out from the outlet 10a of the tank, is sent to the radiator 7 through the pipe 11, and radiates heat to warm the air for air conditioning. The coolant passing through the radiator 7 is suctioned into the pump 3 through the pipe 12 and circulates.

The coolant (not illustrated) is liquid at a room temperature, and is, for example, a heat medium obtained by dissolving ethylene glycol or glycerin in water.

As in the fluid control unit described in Patent Literature 2, the fluid heating unit 10 includes the heater 4, the tank (not illustrated) accommodating the heater 4, and the transistor 5 disposed on an upper wall of the tank.

The heater 4 is an electric heating element that generates heat when being energized, and is not particularly limited. For example, a sheathed heater in which a nichrome wire is wrapped in a metal pipe is used. The tank includes the heating chamber through which the coolant flows and which accommodates the heater 4. The coolant before heating is introduced into the heating chamber through the inlet 10b, and the coolant after heating is led out through the outlet 10a. The heating chamber preferably includes, in a vicinity of the outlet 10a, a temperature sensor 50 that detects the temperature T of the coolant after heating. The temperature sensor 50 is more preferably provided at the outlet 10a.

The transistor 5 is preferably, for example, an insulated gate bipolar transistor (IGBT). The transistor 5 is electrically connected to a battery 8. Further, the transistor 5 is electrically connected to the control device 6, and performs the switching operation in response to a command signal from the heating control device 6. The transistor 5 controls supply of electric power to the heater 4 by the switching operation. By changing the on/off duty ratio of the transistor 5, the heating amount from the heater 4 can be adjusted, and an amount of heat applied to the coolant can be adjusted. The fluid heating unit 10 includes at least the heater 4, the transistor 5, the heating control device 6, and an electric wiring 51 that connects the heater 4, the transistor 5, and the heating control device 6 to form an electric circuit together with the battery 8.

The heating control device 6 controls the switching operation of the transistor 5 based on the heating amount control profile 100 (100A to 100E).

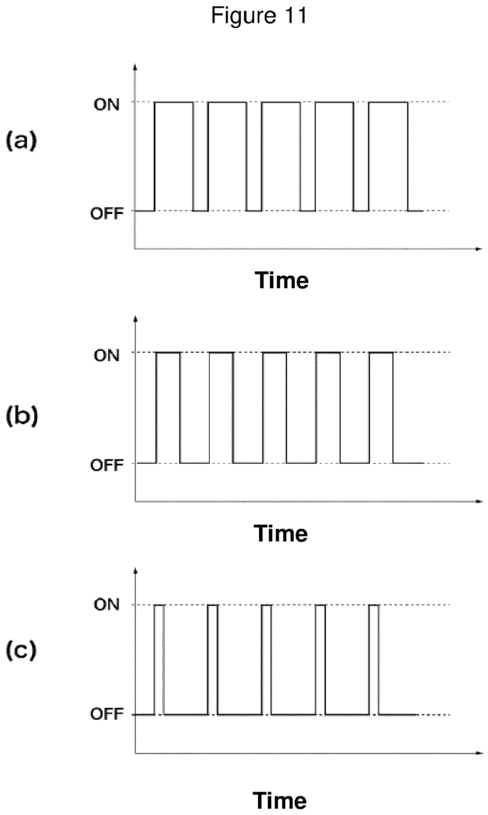

A control program according to the present embodiment causes the heating control device 6 according to the present embodiment to execute a process of controlling the switching operation of the transistor 5 based on the heating amount control profile (100 (100A to 100E)). The heating control device 6 includes a storage unit (not illustrated), and functions as a heating control device by executing the control program read out from the storage unit. Execution of the control program includes, for example, the following processes. First, a current temperature T of the coolant is detected and applied to the heating amount control profile (100 (100A to 100E)) to read the "heating amount E from the heater 4" corresponding to the current temperature T. Next, as illustrated in FIG. 11, duty control is performed to control the transistor 5 such that the "heating amount E corresponding to the current temperature T" is applied to the heater 4.

The radiator 7 is a hot water heat exchanger.

Instead of being provided in the fluid heating unit 10, the temperature sensor 50 may be provided in the pipe 11, of the circulation circuit 2, that connects the outlet 10a of the tank (not illustrated) accommodating the heater 4 and the coolant inflow opening of the radiator 7.

As illustrated in FIGS. 2 to 6, the heating amount control profile 100 (100A to 100E) is a function indicating a relation between the temperature T of the coolant and the heating amount E from the heater. In FIGS. 2 to 6, the heating amount control profile 100 (100A to 100E) is indicated as a graph in which a horizontal axis represents the temperature T of the coolant and a vertical axis represents the heating amount E from the heater 4. The temperature T of the coolant is preferably, for example, the temperature of the coolant led out from the outlet 10a of the fluid heating unit 10, and a unit is, for example, °C. The heating amount E from the heater 4 is, for example, a value adjusted by the on/off duty ratio of the transistor 5, and a unit is, for example, KW/h.

The decrease portion 110 is a portion in which the heating amount E decreases as the temperature T increases from the low temperature side to the high temperature side across the target temperature Tt of the coolant. In FIGS. 2 to 6, the decrease portion 110 is a temperature range from a temperature T1 at which the heating amount E starts to decrease to a temperature Te at which the heating amount E is extremely close to zero or a temperature (not illustrated) at which the heating amount E is zero. The temperature T1 at which the decrease portion 110 starts is preferably {the target temperature Tt} - 10°C, and more preferably {the target temperature Tt} - 8°C. The target temperature Tt is, for example, 80°C to 85°C.

The first decrease portion 111 is a temperature range in the decrease portion 110 from the temperature T1 at which the heating amount E starts to decrease to the target temperature Tt or lower. The first decrease portion 111 includes the first region 111A and the second region 111B on the high temperature side with respect to the first region 111A. A boundary between the first region 111A and the second region 111B is not particularly limited. In FIG. 2, as an example, the boundary is a temperature T3 obtained by bisecting a range between the temperature T1 at which the decrease portion 110 starts and the target temperature Tt, but any temperature may be used as the boundary.

The second decrease portion 112 is a temperature range in the decrease portion 110 from the target temperature Tt to the temperature Te at which the heating amount E is extremely close to zero or the temperature (not illustrated) at which the heating amount E is zero.

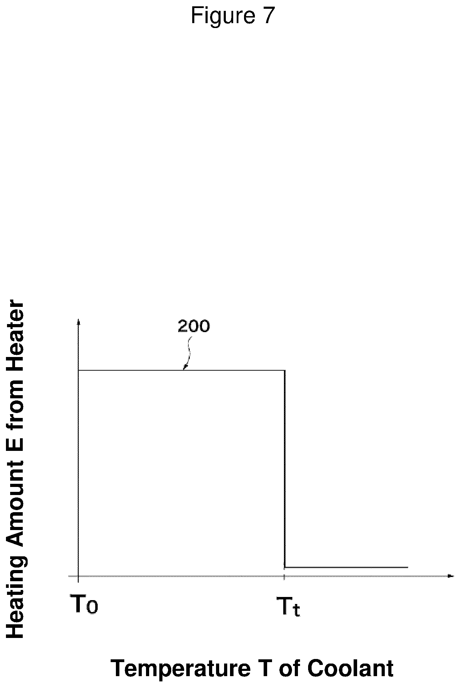

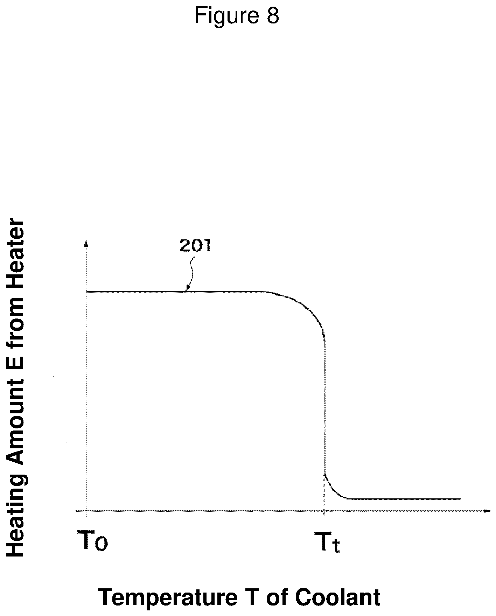

As illustrated in FIGS. 2 to 6, the first decrease portion 111 and the second decrease portion 112 have the same heating amount E at the target temperature Tt. Therefore, as illustrated in FIG. 7 or 8, profile 200 or 201 in which the heating amount decreases at the target temperature Tt is excluded from the heating amount control profile 100. FIG. 7 illustrates a simple on/off control, and FIG. 8 illustrates a modification of FIG. 7. In the profile 200 as illustrated in FIG. 7 or the profile 201 as illustrated in FIG. 8, since the heating amount E sharply decreases at the target temperature Tt, fluctuation of the temperature with respect to the target temperature increases. This is because the heat of the coolant is radiated by the radiator 7, and because the temperature T of the coolant sharply decreases from the target temperature if the heating amount is suddenly set to "zero" in response to the temperature rising and reaching the target temperature Tt.

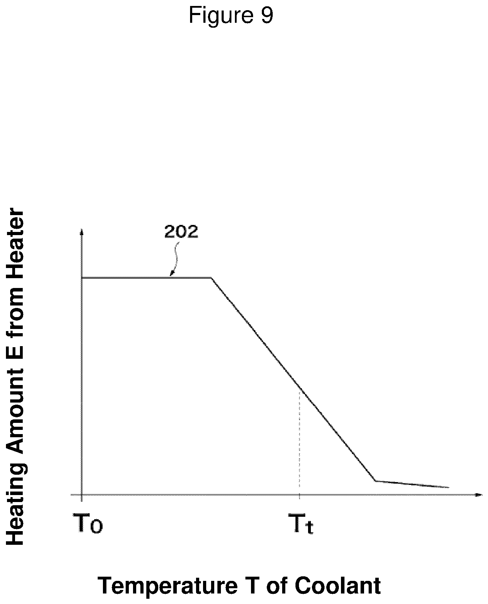

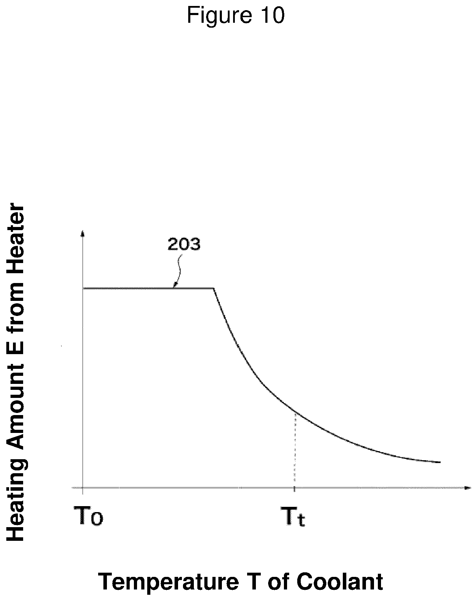

As illustrated in FIGS. 2 to 6, the first decrease portion 111 and the second decrease portion 112 each has the negative slope in the function, and as negative slopes, the slope of the heating amount control profile 100 (100A to 100E) at any temperature in the second region 111B is larger than the slope of the heating amount control profile 100 (100A to 100E) at any temperature in the first region 111A. Accordingly, the temperature can early reach the target temperature, and a fluctuation of the temperature with respect to the target temperature can be reduced. For example, a profile 202 in which the slope is always constant in the first decrease portion 111 as illustrated in FIG. 9, and a profile 203 in which, as negative slopes, the slope at any temperature in the second region 111B is smaller than the slope at any temperature in the first region 111A as illustrated in FIG. 10 are excluded from the heating amount control profile 100. In the profile 202 as illustrated in FIG. 9 or the profile 203 as illustrated in FIG. 10, the temperature rising rate is slow, and the target temperature cannot be reached early.

In the heating cycle device according to the present embodiment, as illustrated in FIGS. 2 to 6, the heating amount control profile 100 (100A to 100E) may include, on the low temperature side with respect to the first decrease portion 111, a constant portion 120 in which the heating amount E is constant even when the temperature T increases from the low temperature side to the high temperature side.

In the heating cycle device according to the present embodiment, as illustrated in FIGS. 2 to 6, the second decrease portion 112 preferably includes, on the high temperature side with respect to the target temperature Tt, a heat radiation amount corresponding region 112A in which the heating amount E is maintained at a predetermined heating amount. The heat radiation amount corresponding region 112A is a region in which the heating amount E is close to zero but is not zero. The temperature Te at the end of the heat radiation amount corresponding region 112A is more preferably {the target temperature Tt + 8°C} ± 1°C. A temperature T2 at the start of the heat radiation amount corresponding region 112A is preferably, for example, {the target temperature Tt + 4°C} ± 1°C. The radiator 7 radiates heat, and the coolant temperature T falls below the target temperature if the heating amount is suddenly set to "zero" in response to the temperature rising and exceeding the target temperature Tt, leading to temperature hunting. However, by providing the heat radiation amount corresponding region 112A, the temperature hunting can be prevented.

In the heating amount control profile 100 (100A to 100E), the temperature T at which the heating amount E is 0 is preferably 90°C. When the temperature exceeds 90°C, problems may occur, such as unintended precipitation of components dissolved in the coolant, or a decrease in heat conduction due to generation of bubbles at an interface between the coolant and a heat transfer wire.

Next, examples of the heating amount control profile 100 (100A to 100E) will be described in more detail.

FIG. 2 is a graph illustrating a first example of the heating amount control profile. In the heating cycle device according to the present embodiment, the decrease portion 110 may be a curve including an inflection point P, and the temperature T at the inflection point P may coincide with the target temperature Tt, as illustrated in FIG. 2. In the heating amount control profile 100 (100A) of the first example, the temperature can reach the target temperature Tt within 15 minutes, for example, and the temperature with respect to the target temperature Tt can be controlled within a range of {the target temperature Tt} ± 1°C, for example. Further, since the temperature T at the inflection point P coincides with the target temperature Tt, the fluctuation of the temperature with respect to the target temperature Tt can be controlled to be small.

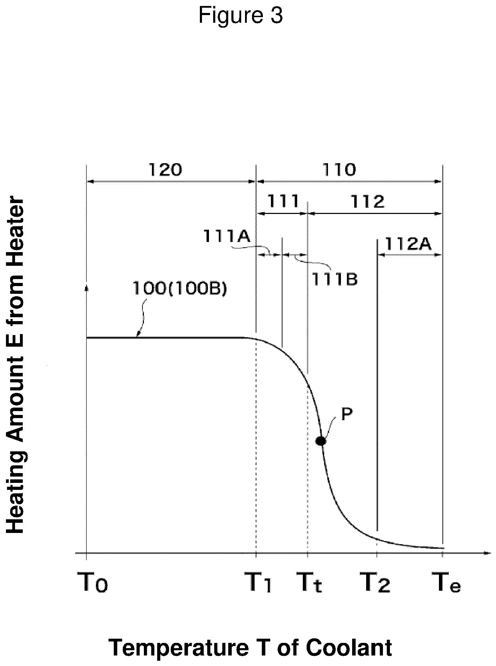

FIG. 3 is a graph illustrating a second example of the heating amount control profile. In the heating cycle device according to the present embodiment, the decrease portion 110 may be a curve including the inflection point P, and the temperature T at the inflection point P may be higher than the target temperature Tt, as illustrated in FIG. 3. The temperature T at the inflection point P is preferably higher than {the target temperature Tt} + 0°C and equal to or lower than {the target temperature Tt} + 4°C, and more preferably equal to or higher than {the target temperature Tt} + 1°C and equal to or lower than {the target temperature Tt} + 2°C. When the temperature T at the inflection point P exceeds {the target temperature Tt} + 4°C, the coolant may be excessively heated with respect to the target temperature. In the heating amount control profile 100 (100B) of the second example, the temperature can reach the target temperature Tt within 15 minutes, for example, and the temperature with respect to the target temperature Tt can be controlled within a range of {the target temperature Tt} ± 1°C, for example. Further, since the temperature T at the inflection point P is on the high temperature side with respect to the target temperature Tt, it is easy to set the heating amount E from the heater to be relatively large when the temperature T of the coolant is the target temperature Tt, and in particular, in the vehicle air conditioner 900 in which the heat radiation amount in the radiator 7 is relatively large, it is possible to suitably control the fluctuation of the temperature with respect to the target temperature Tt to be small.

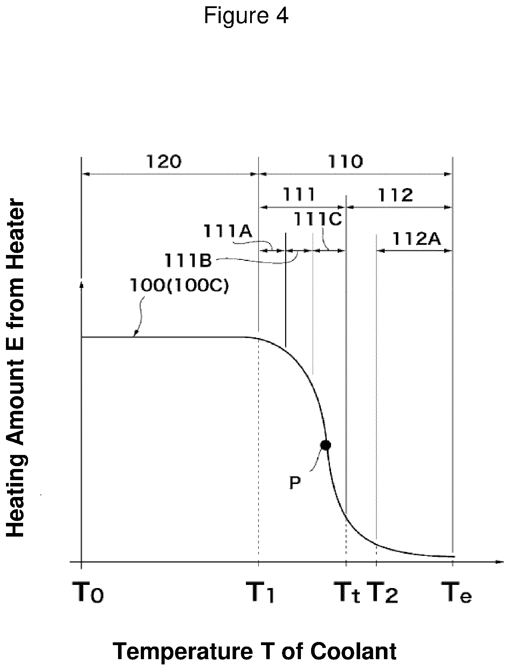

FIG. 4 is a graph illustrating a third example of the heating amount control profile. In the heating cycle device according to the present embodiment, the decrease portion 110 may be a curve including the inflection point P, the temperature T at the inflection point P may be lower than the target temperature Tt, and the second region 111B may be in a region on the low temperature side with respect to the temperature at the inflection point P, as illustrated in FIG. 4. The temperature T at the inflection point P is preferably equal to or higher than {the target temperature Tt} - 4°C and lower than {the target temperature Tt} + 0°C, and more preferably equal to or higher than {the target temperature Tt} - 1°C and equal to or lower than {the target temperature Tt} - 2°C. When the temperature T at the inflection point P is lower than {the target temperature Tt} - 4°C, a time required to reach the target temperature Tt may be long. In the heating amount control profile 100 (100C) of the third example, the first decrease portion 111 includes a third region 111C that is a region on the high temperature side with respect to the temperature at the inflection point P. In the heating amount control profile 100 (100C) of the third example, the temperature can reach the target temperature Tt within 15 minutes, for example, and the temperature with respect to the target temperature Tt can be controlled within a range of {the target temperature Tt} ± 1°C, for example. Further, since the temperature T at the inflection point P is on the low temperature side with respect to the target temperature Tt, it is easy to set the heating amount E from the heater to be relatively small when the temperature T of the coolant is the target temperature Tt, and in particular, in the vehicle air conditioner 900 in which the heat radiation amount in the radiator 7 is relatively small, it is possible to suitably control the fluctuation of the temperature with respect to the target temperature Tt to be small.

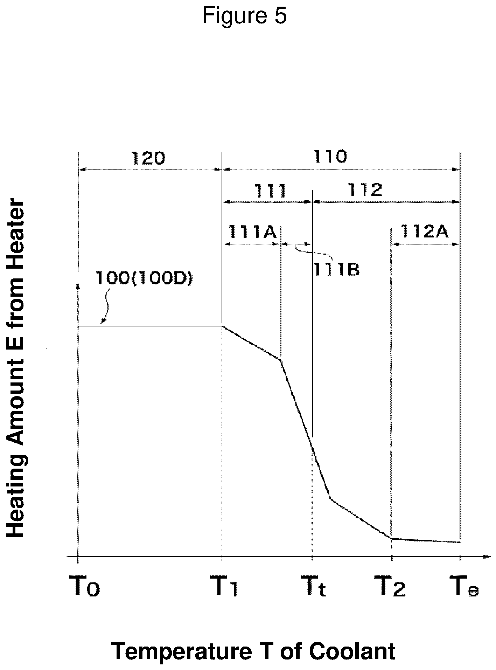

FIG. 5 is a graph illustrating a fourth example of the heating amount control profile. In the heating cycle device according to the present embodiment, the first region 111A and the second region 111B may be linear functions having different slopes in the function, as illustrated in FIG. 5. In the heating amount control profile 100 (100D) of the fourth example, the temperature can reach the target temperature Tt within 15 minutes, for example, and the temperature with respect to the target temperature Tt can be controlled within a range of {the target temperature Tt} ± 1°C, for example.

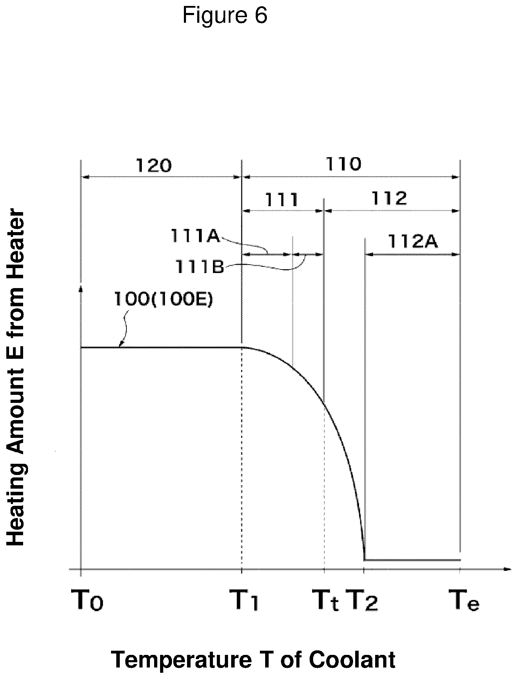

FIG. 6 is a graph illustrating a fifth example of the heating amount control profile. In the heating cycle device according to the present embodiment, the decrease portion 110 may be a curve including no inflection point, as illustrated in FIG. 6. In the heating amount control profile 100 (100E) of the fifth example, the temperature can reach the target temperature Tt within 15 minutes, for example, and the temperature with respect to the target temperature Tt can be controlled within a range of {the target temperature Tt} ± 1°C, for example.

FIG. 11 is a diagram illustrating an example of the duty control of the heating cycle device, in which (a) illustrates the duty control in the constant portion, (b) illustrates the duty control at any temperature in the decrease portion, and (c) illustrates the duty control at any temperature in the heat radiation amount corresponding region. A duty ratio in the decrease portion 110 (illustrated in FIGS. 2 to 6) is set to be smaller than a duty ratio in the constant portion 120 (illustrated in FIGS. 2 to 6). In the decrease portion 110, as illustrated in FIGS. 2 to 6, the heating amount E from the heater 4 is adjusted by gradually decreasing the duty ratio over time. Alternatively, in the decrease portion 110, as illustrated in FIGS. 2 to 6, the heating amount E from the heater 4 is adjusted by gradually decreasing the duty ratio as the temperature of the coolant increases.

A cycle of the duty control is not particularly limited, and is preferably 0.015 second to 0.025 second, for example. In (a) to (c) of FIG. 11, the cycle of the duty control is set to 0.02 second as an example. The duty ratio in the constant portion 120 (illustrated in FIGS. 2 to 6) is not particularly limited, and is preferably equal to or larger than 60% and equal to or smaller than 100%. In (a) of FIG. 11, as an example, the duty ratio in the constant portion 120 (illustrated in FIGS. 2 to 6) is set to 80%. The duty ratio at any temperature in the decrease portion 110 (illustrated in FIGS. 2 to 6) is not particularly limited, and is preferably equal to or larger than 30% and smaller than 60%. In (b) of FIG. 11, as an example, the duty ratio at the target temperature Tt (illustrated in FIG. 2) is set to 50%. The duty ratio at any temperature in the heat radiation amount corresponding region is not particularly limited, and is preferably larger than 0% and smaller than 30%. In (c) of FIG. 11, as an example, the duty ratio at any temperature in the heat radiation amount corresponding region is set to 20%.

In the heating amount control profiles illustrated in FIGS. 2 to 4, the heating amount at the inflection point P is preferably equal to or smaller than 70%, and more preferably equal to or smaller than 60% of the heating amount in the constant portion 120. When the heating amount at the inflection point P exceeds 70% of the heating amount in the constant portion 120, the heating is continued more than necessary even after the temperature of the coolant is increased and exceeds the target temperature Tt, and it is difficult to control the temperature T of the coolant to be close to the target temperature Tt. A lower limit value of the heating amount at the inflection point P is not particularly limited, and is preferably equal to or lager than 30%, and more preferably equal to or larger than 40% of the heating amount in the constant portion 120. When the heating amount at the inflection point P is smaller than 30% of the heating amount in the constant portion 120, the heating amount may be insufficient when the temperature of the coolant approaches the target temperature Tt, and the time required for the temperature of the coolant to reach the target temperature Tt may be long.

As illustrated in FIG. 1, the vehicle air conditioner 900 according to the present embodiment is a vehicle air conditioner that includes the heating cycle device 1 according to the present embodiment and is mounted on a vehicle. The vehicle can be driven by an electric motor. The vehicle air conditioner 900 includes a temperature adjustment unit 901 that adjusts a temperature of air supplied into a vehicle interior. The radiator 7 is a hot water heat exchanger that is disposed inside the temperature adjustment unit 901.

The vehicle air conditioner 900 includes a blower unit 904 and the temperature adjustment unit 901. The blower unit 904 is provided with a blower 902 that blows air taken in from an inside air inlet and/or an outside air inlet (not illustrated) toward an air flow path 903. An internal space of the temperature adjustment unit 901 is the air flow path 903, and the hot water heat exchanger (radiator) 7 is disposed in the air flow path 903. It is preferable that the vehicle air conditioner 900 further include, upstream of the hot water heat exchanger 7 in the air flow path 903, a cooling heat exchanger (not illustrated) that dehumidifies and cools the air sent from the blower unit 904 as necessary, and an air mix door (not illustrated) that is disposed between the cooling heat exchanger and the hot water heat exchanger 7 and adjusts a ratio of the air passing through the hot water heat exchanger 7 and the air bypassing the hot water heat exchanger 7. A defrost opening (not illustrated), a vent opening (not illustrated), and a foot opening (not illustrated) are provided at a most downstream portion of the temperature adjustment unit 901. Each opening is indirectly or directly connected to an air outlet (not illustrated) in the vehicle interior via a duct (not illustrated).

The vehicle includes, for example, an electric vehicle (EV) driven only by an electric motor, a hybrid electric vehicle (HEV) driven by a plurality of power sources including an electric power motor and an internal combustion engine, or a vehicle in which an internal combustion engine generates only electric power and which is driven by the electric motor driven by the electric power generated by the internal combustion engine. In these vehicles, a total amount of the coolant in a coolant loop tends to be smaller than that in an engine-mounted vehicle, and when the temperature hunting occurs at an outflow point of the fluid heating unit, the hunting is likely to affect an entire path. However, the heating cycle device 1 mounted in the vehicle air conditioner according to the present embodiment can control the temperature hunting to be small. When the temperature hunting of the coolant occurs, in a case in which the vehicle air conditioner 900 is operated in a full hot mode, a temperature of the hot air blown out from the air outlet in the vehicle interior may hunt and reduce comfort. Alternatively, in a case in which the vehicle air conditioner 900 is operated in a temperature conditioning mode, it is necessary to frequently adjust a position of the air mix door in order to keep a temperature of the blown out hot air constant, and an operating noise generated by an actuator that drives the air mix door may reduce the comfort.

Although not illustrated, it is preferable that an air volume of the blower 902, the temperature of the air upstream of the radiator 7, and the temperature of the conditioned air downstream of the air mix door are detected and input to the heating control device 6 to estimate the heat radiation amount in the radiator 7 and change the heating amount at the inflection point P in FIGS. 2 to 4 according to the heat radiation amount in the radiator 7. Specifically, when the heat radiation amount in the radiator 7 is relatively large, the inflection point P is adjusted to a value with a larger heating amount, and when the heat radiation amount in the radiator 7 is relatively small, the inflection point P is adjusted to a value with a smaller heating amount. When the heat radiation amount in the heat radiation amount 7 is large, the temperature T of the coolant can early reach the target temperature Tt. When the heat radiation amount in the radiator 7 is small, it is possible to reliably prevent the temperature T of the coolant from further increasing after reaching the target temperature Tt, and to control the temperature T of the coolant to be close to the target temperature Tt.

### Examples

The invention will be described below in more detail based on examples, but the invention is not limited to these examples.

### (First Example)

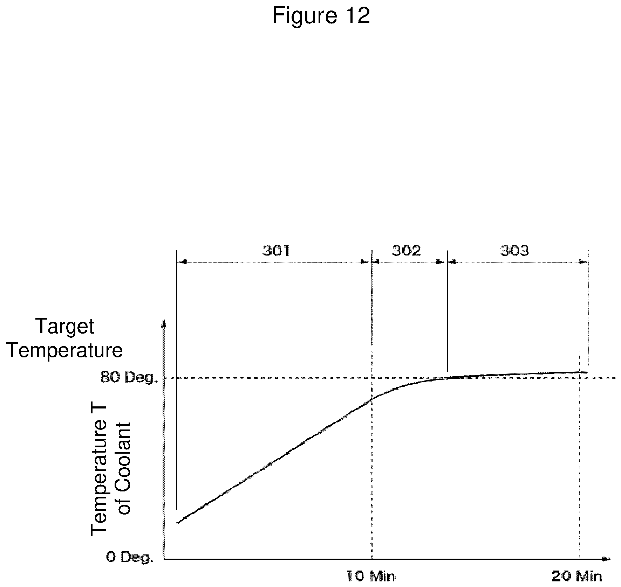

The heating control device controls the switching operation of the transistor based on the heating amount control profile illustrated in FIG. 2, and adjusts the heating amount from the heater by changing the on/off duty ratio of the transistor. The target temperature was set to 80°C. FIG. 12 is a graph illustrating a relation between a heating time and a coolant temperature according to a first example. In FIG. 12, a region denoted by a reference numeral 301 corresponds to the constant portion 120 in FIG. 2, a region denoted by a reference numeral 302 corresponds to the first decrease portion 111, and a region denoted by a reference numeral 303 corresponds to the second decrease portion 112.

### (First Comparative Example)

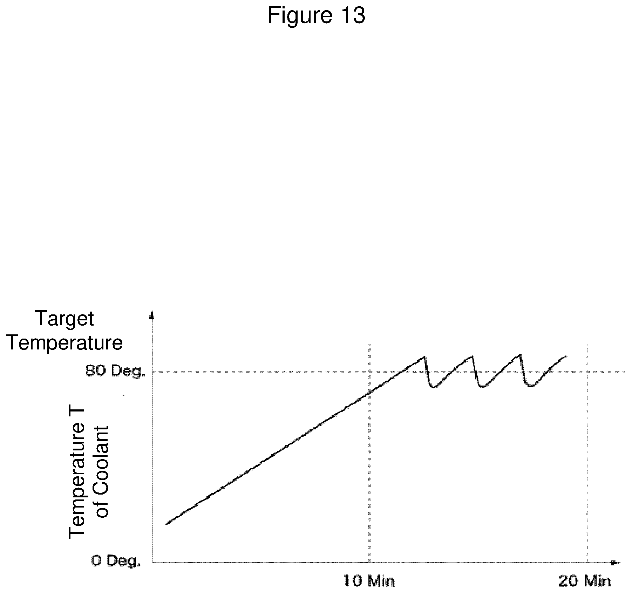

The heating amount from the heater was adjusted in the same manner as in the first example except that the heating amount control profile was changed to the profile illustrated in FIG. 7. The target temperature was set to 80°C. FIG. 13 is a graph illustrating a relation between a heating time and a coolant temperature according to a first comparative example.

### (Second Comparative Example)

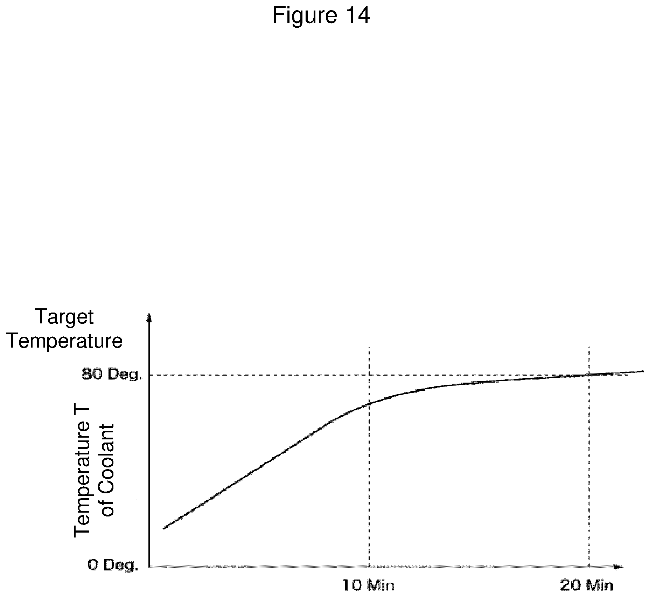

The heating amount from the heater was adjusted in the same manner as in the first example except that the heating amount profile was changed to the profile illustrated in FIG. 9. The target temperature was set to 80°C. FIG. 14 is a graph illustrating a relation between a heating time and a coolant temperature according to a second comparative example.

In the first example, as illustrated in FIG. 12, the time to reach the target temperature was within 15 minutes, and the target temperature can be reached in a short time. Further, the fluctuation of the temperature with respect to the target temperature was within a range of the target temperature ± 1°C, and the fluctuation of the temperature can be controlled to be small. On the other hand, in the first comparative example, as illustrated in FIG. 13, the time to reach the target temperature was within 15 minutes, whereas the fluctuation of the temperature with respect to the target temperature was the target temperature ± 5°C, and the fluctuation of the temperature was large. In the second comparative example, as illustrated in FIG. 14, the fluctuation of the temperature with respect to the target temperature was within the range of the target temperature ± 1°C, whereas the time to reach the target temperature exceeded 20 minutes, and the time to reach the target temperature was long.

### Reference Signs List

1: heating cycle device
2: circulation flow path
3: pump
4: heater
5: transistor
6: heating control device
7: radiator
8: battery
10: fluid heating unit
10a: outlet
10b: inlet
11, 12, 13: pipe
50: temperature sensor
100 (100A to 100E): heating amount control profile
110: decrease portion
111: first decrease portion
112: second decrease portion
111A: first region
111B: second region
111C: third region
112A: heat radiation amount corresponding region
200, 201, 202, 203: profile
900: vehicle air conditioner
901: temperature adjustment unit
902: blower
903: air flow path
904: blower unit
P: inflection point

## Claims

1. A heating control device (6) that controls a transistor (5) that supplies electric power by a switching operation to a heater (4) that generates heat when being energized to heat a coolant supplied to a radiator (7) mounted in a vehicle air conditioner, wherein
the heating control device (6) controls the switching operation of the transistor (5) based on a heating amount control profile (100 (100A to 100E)), and adjusts a heating amount from the heater (4) by changing an on/off duty ratio of the transistor (5), **characterized in that**
the heating amount control profile (100 (100A to 100E)) is a function indicating a relation between a temperature (T) of the coolant and the heating amount (E) from the heater (4), and includes a decrease portion (110) in which the heating amount (E) decreases as the temperature (T) increases from a low temperature side to a high temperature side across a target temperature (Tt) of the coolant,
the decrease portion (110) includes a first decrease portion (111) in which the temperature (T) is in a temperature range equal to or lower than the target temperature (Tt) and a second decrease portion (112) in which the temperature (T) is in a temperature range equal to or higher than the target temperature (Tt), and the first decrease portion (111) and the second decrease portion (112) has the same heating amount (E) at the target temperature (Tt),
the first decrease portion (111) and the second decrease portion (112) each has a negative slope in the function,
the first decrease portion (111) includes a first region (111A) and a second region (111B) on the high temperature side with respect to the first region (111A), and
as negative slopes, a slope of the heating amount control profile (100 (100A to 100E)) at any temperature in the second region (111B) is larger than a slope of the heating amount control profile (100 (100A to 100E)) at any temperature in the first region (111A).

2. The heating control device according to claim 1, wherein
the decrease portion (110) is a curve including an inflection point (P), and
the temperature (T) at the inflection point (P) coincides with the target temperature (Tt).

3. The heating control device according to claim 1, wherein
the decrease portion (110) is a curve including an inflection point (P), and
the temperature (T) at the inflection point (P) is higher than the target temperature (Tt).

4. The heating control device according to claim 1, wherein
the decrease portion (110) is a curve including an inflection point (P),
the temperature (T) at the inflection point (P) is lower than the target temperature (Tt), and
the second region (111B) is in a region on the low temperature side with respect to the inflection point (P).

5. The heating control device according to claim 1, wherein
the first region (111A) and the second region (111B) both are linear functions having different slopes in the function.

6. The heating control device according to claim 1, wherein
the decrease portion (110) is a curve including no inflection point (P).

7. The heating control device according to any one of claims 1 to 6, wherein
the heating amount control profile (100 (100A to 100E)) includes, on the low temperature side with respect to the first decrease portion (111), a constant portion (120) in which the heating amount (E) is constant even when the temperature (T) increases from the low temperature side to the high temperature side.

8. The heating control device according to any one of claims 1 to 7, wherein
the second decrease portion (112) includes, on the high temperature side with respect to the target temperature (Tt), a heat radiation amount corresponding region (112A) in which the heating amount (E) is maintained at a predetermined heating amount.

9. A fluid heating unit (10), comprising:
a heater (4) configured to generate heat when being energized to heat a coolant;
a transistor (5) configured to supply electric power to the heater (4) by a switching operation; and
the heating control device (6) according to any one of claims 1 to 8, wherein
the heating control device (6) controls the switching operation of the transistor (5).

10. A heating cycle device comprising:
a circulation flow path (2);
a coolant filled in the circulation flow path (2);
a pump (3) configured to circulate the coolant in the circulation flow path (2);
the fluid heating unit (10) according to claim 9 configured to adjust a temperature of the coolant; and
a radiator (7) configured to radiate heat from the coolant, wherein
the coolant is heated when the heater (4) is energized by the transistor (5) in the fluid heating unit (10).

11. A vehicle air conditioner (900) mounted on a vehicle, comprising:
the heating cycle device (1) according to claim 10, wherein
the vehicle is capable of being driven by an electric motor,
the vehicle air conditioner (900) further comprises a temperature adjustment unit (901) configured to adjust a temperature of air supplied into a vehicle interior, and
the radiator (7) is a hot water heat exchanger disposed inside the temperature adjustment unit (901).

12. A control program configured to cause the heating control device (6) according to any one of claims 1 to 8 to execute a process of controlling the switching operation of the transistor (5) based on the heating amount control profile (100 (100A to 100E)) according to the steps of claim 1.

## Patentansprüche

1. Eine Heizungssteuervorrichtung (6), die einen Transistor (5) steuert, der einem Heizelement (4), das Wärme erzeugt, wenn es bestromt wird, um ein einem in einem Fahrzeugklimaanlagensystem montierten Kühler (7) zugeführtes Kühlmittel zu erwärmen,
durch einen Schaltbetrieb elektrische Energie zuführt, wobei die
Heizungssteuervorrichtung (6) den Schaltbetrieb des Transistors (5) basierend auf einem Heizmengensteuerungsprofil (100 (100A bis 100E)) steuert und eine Heizmenge des Heizelements (4) durch Änderung eines Ein-/Aus-Tastverhältnisses des Transistors (5) anpasst, **dadurch gekennzeichnet, dass** das Heizmengensteuerungsprofil (100 (100A bis 100E)) eine Funktion ist, die eine Beziehung zwischen einer Temperatur (T) des Kühlmittels und der Heizmenge (E) des Heizelements (4) angibt, und einen Abnahmeabschnitt (110) umfasst, in dem die Heizmenge (E) abnimmt, wenn die Temperatur (T) von einer Niedertemperaturseite zu einer Hochtemperaturseite über eine Zieltemperatur (Tt) des Kühlmittels hinaus ansteigt, der Abnahmeabschnitt (110) einen ersten Abnahmeabschnitt (111), in dem die Temperatur (T) in einem Temperaturbereich gleich oder niedriger als die Zieltemperatur (Tt) liegt, und einen zweiten Abnahmeabschnitt (112) umfasst, in dem die Temperatur (T) in einem Temperaturbereich gleich oder höher als die Zieltemperatur (Tt) liegt, und der erste Abnahmeabschnitt (111) und der zweite Abnahmeabschnitt (112) bei der Zieltemperatur (Tt) die gleiche Heizmenge (E) aufweisen,
der erste Abnahmeabschnitt (111) und der zweite Abnahmeabschnitt (112) jeweils eine negative Steigung in der Funktion aufweisen, der erste Abnahmeabschnitt (111) einen ersten Bereich (111A) und einen zweiten Bereich (111B) auf der Hochtemperaturseite in Bezug auf den ersten Bereich (111A) umfasst, und als negative Steigungen eine Steigung des Heizmengensteuerungsprofils (100 (100A bis 100E)) bei einer beliebigen Temperatur im zweiten Bereich (111B) größer ist als eine Steigung des Heizmengensteuerungsprofils (100 (100A bis 100E)) bei einer beliebigen Temperatur im ersten Bereich (111A).

2. Die Heizungssteuervorrichtung gemäß Anspruch 1, wobei der Abnahmeabschnitt (110) eine Kurve ist, die einen Wendepunkt (P) umfasst, und die Temperatur (T) am Wendepunkt (P) mit der Zieltemperatur (Tt) übereinstimmt.

3. Die Heizungssteuervorrichtung gemäß Anspruch 1, wobei der Abnahmeabschnitt (110) eine Kurve ist, die einen Wendepunkt (P) umfasst, und die Temperatur (T) am Wendepunkt (P) höher als die Zieltemperatur (Tt) ist.

4. Die Heizungssteuervorrichtung gemäß Anspruch 1, wobei der Abnahmeabschnitt (110) eine Kurve ist, die einen Wendepunkt (P) umfasst, die Temperatur (T) am Wendepunkt (P) niedriger als die Zieltemperatur (Tt) ist, und der zweite Bereich (111B) in einem Bereich auf der Niedertemperaturseite in Bezug auf den Wendepunkt (P) liegt.

5. Die Heizungssteuervorrichtung gemäß Anspruch 1, wobei der erste Bereich (111A) und der zweite Bereich (111B) beide lineare Funktionen mit unterschiedlichen Steigungen in der Funktion sind.

6. Die Heizungssteuervorrichtung gemäß Anspruch 1, wobei der Abnahmeabschnitt (110) eine Kurve ist, die keinen Wendepunkt (P) umfasst.

7. Die Heizungssteuervorrichtung gemäß einem der Ansprüche 1 bis 6, wobei das Heizmengensteuerungsprofil (100 (100A bis 100E)) auf der Niedertemperaturseite in Bezug auf den ersten Abnahmeabschnitt (111) einen konstanten Abschnitt (120) umfasst, in dem die Heizmenge (E) konstant bleibt, auch wenn die Temperatur (T) von der Niedertemperaturseite zur Hochtemperaturseite ansteigt.

8. Die Heizungssteuervorrichtung gemäß einem der Ansprüche 1 bis 7, wobei der zweite Abnahmeabschnitt (112) auf der Hochtemperaturseite in Bezug auf die Zieltemperatur (Tt) einen Wärmeabstrahlungsmengen-Entsprechungsbereich (112A) umfasst, in dem die Heizmenge (E) auf einer vorbestimmten Heizmenge gehalten wird.

9. Eine Fluidheizeinheit (10), umfassend:
ein Heizelement (4), das dazu ausgelegt ist, Wärme zu erzeugen, wenn es bestromt wird, um ein Kühlmittel zu erwärmen;
einen Transistor (5), der dazu ausgelegt ist, dem Heizelement (4) durch einen Schaltbetrieb elektrische Energie zuzuführen; und
die Heizungssteuervorrichtung (6) gemäß einem der Ansprüche 1 bis 8, wobei
die Heizungssteuervorrichtung (6) den Schaltbetrieb des Transistors (5) steuert.

10. Eine Heizkreislaufvorrichtung, umfassend:
einen Umlaufströmungsweg (2);
ein in dem Umlaufströmungsweg (2) eingefülltes Kühlmittel;
eine Pumpe (3), die dazu ausgelegt ist, das Kühlmittel im Umlaufströmungsweg (2) zu zirkulieren;
die Fluidheizeinheit (10) gemäß Anspruch 9, die dazu ausgelegt ist, eine Temperatur des Kühlmittels anzupassen; und
einen Kühler (7), der dazu ausgelegt ist, Wärme vom Kühlmittel abzustrahlen, wobei
das Kühlmittel erwärmt wird, wenn das Heizelement (4) durch den Transistor (5) in der Fluidheizeinheit (10) bestromt wird.

11. Eine in einem Fahrzeug montierte Fahrzeugklimaanlage (900), umfassend:
die Heizkreislaufvorrichtung (1) gemäß Anspruch 10, wobei
das Fahrzeug durch einen Elektromotor antreibbar ist,
die Fahrzeugklimaanlage (900) ferner eine Temperaturanpassungseinheit (901) umfasst, die dazu ausgelegt ist, eine Temperatur der in einen Fahrzeuginnenraum zugeführten Luft anzupassen, und
der Kühler (7) ein Warmwasser-Wärmetauscher ist, der im Inneren der Temperaturanpassungseinheit (901) angeordnet ist.

12. Ein Steuerprogramm, das dazu ausgelegt ist, die Heizungssteuervorrichtung (6) gemäß einem der Ansprüche 1 bis 8 zu veranlassen, einen Prozess zur Steuerung des Schaltbetriebs des Transistors (5) basierend auf dem Heizmengensteuerungsprofil (100 (100A bis 100E)) gemäß den Schritten von Anspruch 1 auszuführen.

## Revendications

1. Un dispositif de contrôle de chauffage (6) qui contrôle un transistor (5) qui fournit de l'énergie électrique par une opération de commutation à un élément chauffant (4) qui génère de la chaleur lorsqu'il est mis sous tension pour chauffer un liquide de refroidissement fourni à un radiateur (7) monté dans un climatiseur de véhicule, dans lequel le dispositif de contrôle de chauffage (6) contrôle l'opération de commutation du transistor (5) sur la base d'un profil de contrôle de quantité de chaleur (100 (100A à 100E)), et ajuste une quantité de chaleur provenant de l'élément chauffant (4) en modifiant un rapport cyclique marche/arrêt du transistor (5), **caractérisé en ce que** le profil de contrôle de quantité de chaleur (100 (100A à 100E)) est une fonction indiquant une relation entre une température (T) du liquide de refroidissement et la quantité de chaleur (E) provenant de l'élément chauffant (4), et comprend une partie de diminution (110) dans laquelle la quantité de chaleur (E) diminue à mesure que la température (T) augmente d'un côté basse température vers un côté haute température en traversant une température cible (Tt) du liquide de refroidissement, la partie de diminution (110) comprend une première partie de diminution (111) dans laquelle la température (T) se situe dans une plage de température égale ou inférieure à la température cible (Tt) et une deuxième partie de diminution (112) dans laquelle la température (T) se situe dans une plage de température égale ou supérieure à la température cible (Tt), et la première partie de diminution (111) et la deuxième partie de diminution (112) ont la même quantité de chaleur (E) à la température cible (Tt), la première partie de diminution (111) et la deuxième partie de diminution (112) ont chacune une pente négative dans la fonction, la première partie de diminution (111) comprend une première région (111A) et une deuxième région (111B) du côté haute température par rapport à la première région (111A), et en tant que pentes négatives, une pente du profil de contrôle de quantité de chaleur (100 (100A à 100E)) à n'importe quelle température dans la deuxième région (111B) est plus grande qu'une pente du profil de contrôle de quantité de chaleur (100 (100A à 100E)) à n'importe quelle température dans la première région (111A).

2. Le dispositif de contrôle de chauffage selon la revendication 1, dans lequel la partie de diminution (110) est une courbe comprenant un point d'inflexion (P), et la température (T) au point d'inflexion (P) coïncide avec la température cible (Tt).

3. Le dispositif de contrôle de chauffage selon la revendication 1, dans lequel la partie de diminution (110) est une courbe comprenant un point d'inflexion (P), et la température (T) au point d'inflexion (P) est supérieure à la température cible (Tt).

4. Le dispositif de contrôle de chauffage selon la revendication 1, dans lequel la partie de diminution (110) est une courbe comprenant un point d'inflexion (P), la température (T) au point d'inflexion (P) est inférieure à la température cible (Tt), et la deuxième région (111B) se situe dans une région du côté basse température par rapport au point d'inflexion (P).

5. Le dispositif de contrôle de chauffage selon la revendication 1, dans lequel la première région (111A) et la deuxième région (111B) sont toutes deux des fonctions linéaires ayant des pentes différentes dans la fonction.

6. Le dispositif de contrôle de chauffage selon la revendication 1, dans lequel la partie de diminution (110) est une courbe ne comprenant aucun point d'inflexion (P).

7. Le dispositif de contrôle de chauffage selon l'une quelconque des revendications 1 à 6, dans lequel le profil de contrôle de quantité de chaleur (100 (100A à 100E)) comprend, du côté basse température par rapport à la première partie de diminution (111), une partie constante (120) dans laquelle la quantité de chaleur (E) est constante même lorsque la température (T) augmente du côté basse température vers le côté haute température.

8. Le dispositif de contrôle de chauffage selon l'une quelconque des revendications 1 à 7, dans lequel la deuxième partie de diminution (112) comprend, du côté haute température par rapport à la température cible (Tt), une région correspondant à la quantité de rayonnement thermique (112A) dans laquelle la quantité de chaleur (E) est maintenue à une quantité de chaleur prédéterminée.

9. Une unité de chauffage de fluide (10), comprenant :
un élément chauffant (4) configuré pour générer de la chaleur lorsqu'il est mis sous tension afin de chauffer un liquide de refroidissement ;
un transistor (5) configuré pour fournir de l'énergie électrique à l'élément chauffant (4) par une opération de commutation ; et
le dispositif de contrôle de chauffage (6) selon l'une quelconque des revendications 1 à 8, dans lequel
le dispositif de contrôle de chauffage (6) contrôle l'opération de commutation du transistor (5).

10. Un dispositif à cycle de chauffage comprenant :
un circuit de circulation (2) ;
un liquide de refroidissement rempli dans le circuit de circulation (2) ;
une pompe (3) configurée pour faire circuler le liquide de refroidissement dans le circuit de circulation (2) ;
l'unité de chauffage de fluide (10) selon la revendication 9 configurée pour ajuster une température du liquide de refroidissement ; et
un radiateur (7) configuré pour rayonner la chaleur du liquide de refroidissement, dans lequel
le liquide de refroidissement est chauffé lorsque l'élément chauffant (4) est mis sous tension par le transistor (5) dans l'unité de chauffage de fluide (10).

11. Un climatiseur de véhicule (900) monté sur un véhicule, comprenant :
le dispositif à cycle de chauffage (1) selon la revendication 10, dans lequel
le véhicule est capable d'être entraîné par un moteur électrique,
le climatiseur de véhicule (900) comprend en outre une unité de réglage de température (901) configurée pour ajuster une température de l'air fourni à l'intérieur d'un habitacle de véhicule, et
le radiateur (7) est un échangeur de chaleur à eau chaude disposé à l'intérieur de l'unité de réglage de température (901).

12. Un programme de contrôle configuré pour amener le dispositif de contrôle de chauffage (6) selon l'une quelconque des revendications 1 à 8 à exécuter un processus de contrôle de l'opération de commutation du transistor (5) sur la base du profil de contrôle de quantité de chaleur (100 (100A à 100E)) selon les étapes de la revendication 1.
